# EUROPÄISCHE PATENTSCHRIFT

(11) **EP 1 860 021 B1**
(45) Veröffentlichungstag und Bekanntmachung des Hinweises auf die Patenterteilung: **14.10.2009**
(21) Anmeldenummer: 07009282.0
(22) Anmeldetag: 09.05.2007
(51) Int. Cl.: B62D 27/06

(54) **Befestigungseinrichtung zur Befestigung eines Bauteiles an einer Stützwand eines Kraftfahrzeugs**
Mounting arrangement to attach a component to a supporting wall of a motor vehicle.
Dispositive de fixation d'un élément à un panneau de support d'un véhicule automobile.

(30) Priorität: 23.05.2006 DE 102006024056
(43) Veröffentlichungstag der Anmeldung: 28.11.2007
(73) Patentinhaber: Bayerische Motoren Werke Aktiengesellschaft, 80809 München (DE)
(72) Erfinder: Stolz, Jochen, 80995 München (DE)

(56) Entgegenhaltungen:
- DE-A1- 4 212 180
- DE-A1- 10 007 046
- DE-A1- 10 255 296
- DE-A1- 10 258 880
- DE-C1- 3 936 376
- DE-C1- 4 314 441

## Beschreibung

Die Erfindung betrifft eine Befestigungseinrichtung zur Befestigung eines Bauteiles an einer Stützwand eines Kraftfahrzeugs, mit den im Oberbegriff des Patentanspruches 1 angegebenen und in der DE 102 55 296 A1 beschriebenen Merkmalen.

Eine derartige Befestigungseinrichtung ist bei BMW Kraftfahrzeugen der Baureihe X5 zur Befestigung eines Getriebes am Unterboden des Kraftfahrzeugs verwendet, bei der das Stützteil lediglich an einer Stirnseite mit der Stützwand verbunden ist. Am Stützteil wirkende Querkräfte und/oder Biegemomente sind deshalb im wesentlichen von der Stützwand aufzunehmen, die entsprechend steif auszubilden und aufwändig mit einer Stirnseite des Stützteiles zu verbinden ist.

Der Erfindung liegt die Aufgabe zu Grunde, eine Befestigungseinrichtung mit den Merkmalen im Oberbegriff des Patentanspruches 1 anzugeben, die mit einfachen Mitteln auch größere Kräfte und/oder Momente aufnehmen und unter weitgehender Vermeidung von Belastungsspitzen in die Stützwand einleiten kann.

Diese Aufgabe ist durch die Merkmale im Patentanspruch 1 gelöst. Vorteilhafte Ausgestaltungen der Erfindung sind den Unteransprüchen entnehmbar.

Nachdem das ein- oder mehrteilige Stützteil einerseits mit einem Umfangsbereich des Gewindeelements oder mit dem Stirnbereich des Gewindeelements verbunden ist, der von der Stützwand abgewandt ist, und andererseits mit einem Bereich der Stützwand oder einer ortsfesten Wand verbunden ist, werden an dem Gewindeelement wirkende Kräfte und/oder Momente nicht nur über die an der Stützwand anliegende Stirnseite des Gewindeelements auf die Stützwand übertragen, sondern auch über das mit dem Gewindeelement verbundene und dadurch das Gewindeelement stützende Stützteil auf die Stützwand und/oder eine ortsfeste Wand übertragen. Die Kraft- und Momentenübertragung erfolgt somit an mehreren Stellen, wodurch Belastungsspitzen bei der Abstützung auch größerer Kräfte und Momente weitgehend vermieden sind. Das Stützteil kann ein einfaches Blechteil sein, das beispielsweise einteilig besonders kostengünstig zu fertigen und/oder über einfache Schweißpunkte oder -nähte mit dem Gewindeelement und/oder über Schweißpunkte und/odernähte und/oder Verschraubungen mit der Stützwand und/oder der ortsfesten Wand zu verbinden ist.

Ein Ausführungsbeispiel der Erfindung wird anhand einer Zeichnung näher erläutert. Es zeigen
- Fig. 1: einen Querschnitt durch die Befestigungseinrichtung,
- Fig. 2: das Gewindeelement in einer Seitenansicht,
- Fig. 3: das Gewindeelement in einer Draufsicht,
- Fig. 4: eine perspektivische Ansicht von dem vor der Montage auf das Gewindeelement aufgesetzten Stützteil,
- Fig. 5: einen Querschnitt durch das in Fig. 4 dargestellte Gewindeelement und das Stützteil und
- Fig. 6: eine Seitenansicht von dem in Fig. 4 dargestellten Gewindeelement und von dem Stützteil.

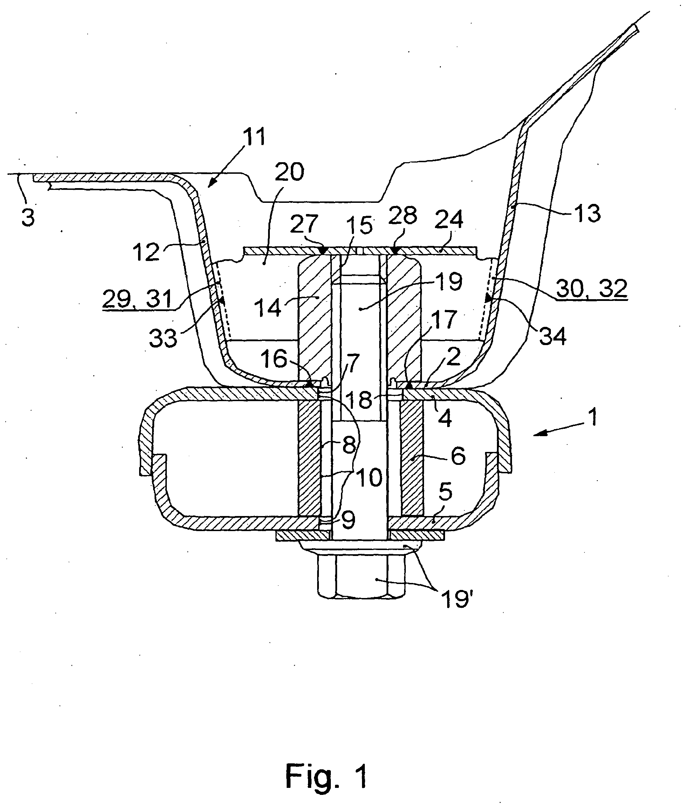

In Figur 1 ist eine Befestigungseinrichtung zur Befestigung eines Bauteiles 1 an einer Stützwand 2 im Bodenbereich 3 eines Kraftfahrzeugs dargestellt, wobei das Bauteil ein Brückenrahmen 1 ist, an dem ein nicht dargestelltes Getriebe befestigt ist. Der Brückenrahmen 1 weist ein Oberteil 4 und ein Unterteil 5 auf, zwischen denen eine Distanzbuchse 6 angeordnet ist. Das Oberteil 4 und das Unterteil 5 sowie die Distanzbuchse 6 weisen jeweils eine Öffnung 7, 8, 9 mit eventuell geringfügig unterschiedlichen Durchmessern auf, die eine durchgehende koaxiale Öffnung 10 bilden.

Mit der Unterseite des Bodenbereiches 3 ist ein U-Profil 11 verbunden, wobei der Boden des U-Profils 11 unten angeordnet eine Stützwand 2 bildet, von der mit seitlichem Abstand Schenkelwände 12, 13 nach oben abstehen, die an ihren oberen, zur Seite abgewickelten Endbereichen mit dem Bodenbereich 3 des Kraftfahrzeugs verbunden sind. An der Oberseite der Stützwand 2 ist ein Gewindeelement 14 mit einem zentralen, durchgehenden Gewinde 15 angeordnet. Das Gewindeelement 14 ist an seinem unteren Stirnbereich an Befestigungspunkten 16, 17 oder über ein oder mehrere Umfangsbereiche mit der Stützwand 2 verschweißt.

Die Stützwand 2 weist vor dem Gewinde 15 eine Durchtrittsöffnung 18 auf, so dass eine Gewindeschraube 19 mit ihrem Schaft durch die durchgehende Öffnung 7 und die mit der Öffnung 7 fluchtende Durchtrittsöffnung 18 hindurch in das Gewinde 15 des Gewindeelements 14 einschraubbar ist, wobei die Gewindeschraube 19 mit einem Kopfteil 19' den Brückenrahmen 1 zu der Stützwand 2 sowie zu dem Gewindeelement 14 belastet.

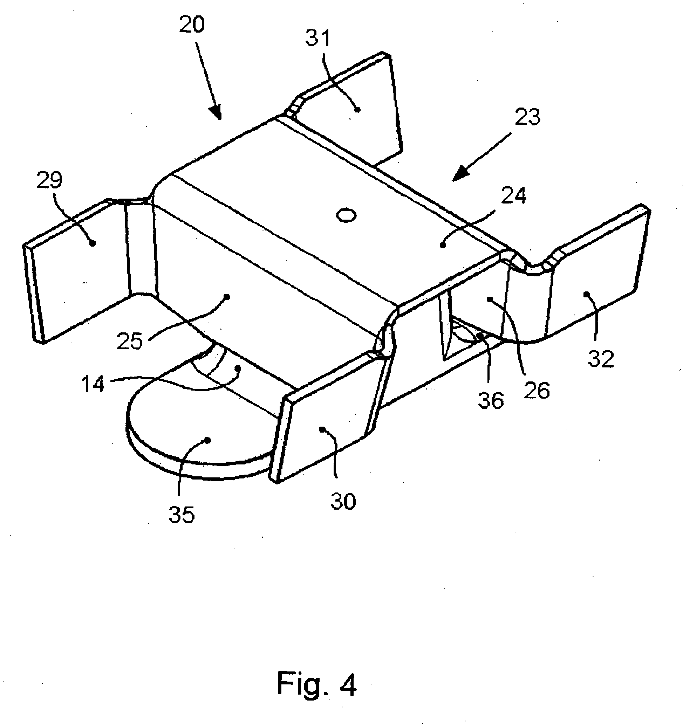

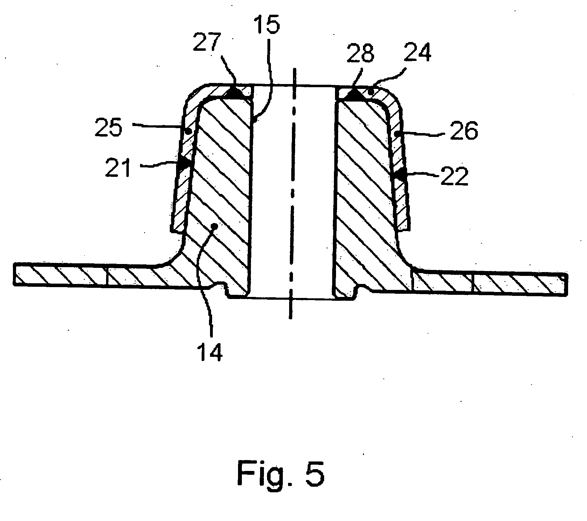

Ein als einteiliges Blechteil ausgebildetes Stützteil 20 weist einen Mittelbereich 23 auf, der im Querschnitt U-förmig ausgebildet ist und eine Bodenfläche 24 sowie zwei mit einem Abstand voneinander von der Bodenfläche 24 nach unten abstehende Schenkelflächen 25, 26 aufweist. Die Schenkelflächen 25, 26 sind beispielsweise über Schweißpunkte 21, 22 wie in Figur 5 dargestellt mit gegenüber liegenden Umfangsbereichen des Gewindeelements 14 verbunden. Außerdem ist die Bodenfläche 24 des Stützteiles 20 beispielsweise wie in Figur 5 dargestellt über Schweißnähte 27, 28 mit dem Stirnbereich des Gewindeelements 14 verbunden, der von der Stützwand 2 abgewandt ist. Beide Seitenbereiche der Schenkelflächen 25, 26 weisen jeweils einen verlängerten Flächenbereich 29, 30, 31, 32 auf, die - wie in Figur 4 besonders deutlich erkennbar - von der zugeordneten Schenkelfläche 25, 26 seitlich nach außen abgewinkelt sind. Die Flächenbereiche 29, 30, 31, 32 bilden Befestigungslaschen, von denen jeweils zwei Flächenbereiche 29, 31 bzw. 30, 32 mit einer zugeordneten ortsfesten Wand 12, 13 beispielsweise über Schweißpunkte 33, 34 verbunden sind, die in Fig. 1 teilweise dargestellt sind. Dabei sind die ortsfesten Wände durch die Schenkelwände 12, 13 des U-Profils 11 gebildet. Das Gewindeelement 14 ist dadurch stirnseitig mit der Stützwand 2 verbunden und von dem Stützteil 20 seitlich und an der oberen Stirnseite gestützt, wodurch das Gewindeelement 14 erhebliche statische und/oder dynamische Kräfte und/oder Momente aufnehmen und auf die Karosserie des Kraftfahrzeugs übertragen kann und gleichzeitig gegenüber dynamischen Kräften und/oder Momenten akustisch dämpfend wirkt.

Das Gewindeelement 14 weist an seinem mit der Stützwand 2 verbundenen Stirnbereich entgegen gesetzt seitlich abstehende Laschen 35, 36 auf, die mit der Stützwand 2 über nicht dargestellte Schweißpunkte oder -nähte oder Schrauben verbunden oder zu verbinden sind.

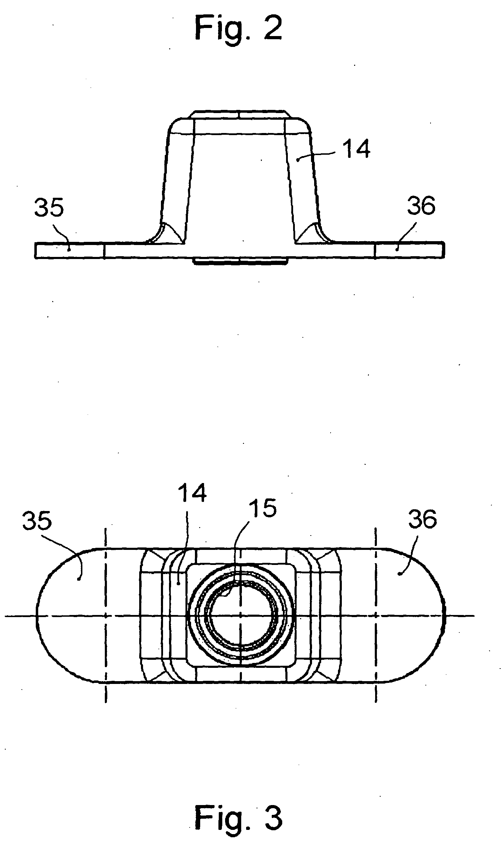

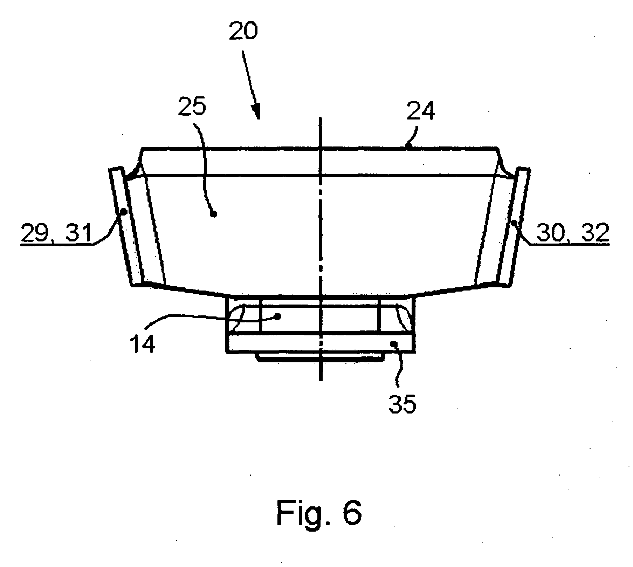

Den Figuren 2 bis 6 sind weitere Einzelheiten entnehmbar. In den Figuren 1, 5 und 6 ist beispielsweise erkennbar, dass die Schenkelwände 12, 13 und die Flächenbereiche 29 bis 32 sowie die Seitenflächen des Gewindeelements 14 und die Schenkelflächen 25, 26 etwas schräg gestellt sind.

Das Stützteil kann ein- oder mehrteilig ausgebildet sein. Ein verlängerter Flächenbereich kann an einer beliebigen Stelle des Stützteiles, beispielsweise an der Bodenfläche und/oder an wenigstens einer Schenkelfläche des Stützteiles vorgesehen sein. Das Stützteil kann auch von dem Ausführungsbeispiel abweichend an dem Gewindeelement befestigt sein oder das Gewindeelement auf andere Weise lediglich stützen oder zusätzlich stützen. Das Bauteil kann auch dadurch über das Gewindeelement an der Stützwand befestigt sein, dass das Bauteil von der von der Stützwand abgewandten Stirnseite her mit dem Gewindeelement verschraubt wird. Das an der Gewindebuchse zu befestigende Bauteil kann ein beliebiges Bauteil oder Aggregat sein. Bei Verwendung eines Brückenrahmens als Bauteil kann dieser auch eine von dem Ausführungsbeispiel abweichende Anzahl von Bauteilen aufweisen und/oder abstützen. Die Bauteile des Brückenrahmens können auch fest oder lösbar miteinander verbunden sein.

## Patentansprüche

1. Befestigungseinrichtung zur Befestigung eines Bauteiles an einer Stützwand (2) eines Kraftfahrzeugs, mit einem Gewindeelement (14), das mit der Stützwand (2) verbunden ist und ein Gewinde (15) aufweist, in das zur Befestigung des Bauteiles (1) an der Stützwand (2) eine Gewindeschraube (19) einschraubbar ist, und ein Stützteil (20) einerseits mit dem Stirnbereich des Gewindeelements (14) verbunden ist, der von der Stützwand (2) abgewandt ist, und andererseits mit einem Bereich der Stützwand oder einer ortsfesten Wand (12, 13) der Stützwand (2) verbunden ist, **dadurch gekennzeichnet, dass** das Stützteil (20) einen Mittelbereich (23) aufweist, der im Querschnitt U-förmig ausgebildet ist und eine Bodenfläche (24) sowie zwei mit einem Abstand voneinander von der Bodenfläche (24) abstehende Schenkelflächen (25, 26) aufweist, wobei die Bodenfläche (24) mit dem Stirnbereich des Gewindeelements (14) verbunden ist, der von der Stützwand (2) abgewandt ist, und das Stützteil (20) an wenigstens einem Umfangsbereich des Gewindeelements (14) anliegend das Gewindeelement (14) seitlich stützt.

2. Befestigungseinrichtung nach Patentanspruch 1, **dadurch gekennzeichnet, dass** das Stützteil (20) ein Blechteil ist.

3. Befestigungseinrichtung nach Patentanspruch 1 oder 2, **dadurch gekennzeichnet, dass** das Stützteil (20) mit einem Umfangsbereich des Gewindeelements (14) verbunden ist.

4. Befestigungseinrichtung nach einem der Patentansprüche 1 bis 3, **dadurch gekennzeichnet, dass** das Stützteil (20) ein- oder mehrteilig ausgebildet ist.

5. Befestigungseinrichtung nach Patentanspruch 4, **dadurch gekennzeichnet, dass** wenigstens ein Seitenbereich der Bodenfläche und/oder wenigstens einer Schenkelfläche (25, 26) einen verlängerten Flächenbereich (29, 30, 31, 32) aufweist, der zur betreffenden Bodenfläche bzw. Schenkelfläche (25, 26) abgewinkelt ist und **dadurch** eine Befestigungslasche bildet, die mit einer ortsfesten Wand (12, 13) verbunden oder zu verbinden ist.

6. Befestigungseinrichtung nach Patentanspruch 5, **dadurch gekennzeichnet, dass** zumindest an zwei entgegen gesetzten Seitenbereichen des Stützteiles (20) zumindest eine Schenkelfläche (25, 26) oder die Bodenfläche eine Befestigungslasche bildet.

7. Befestigungseinrichtung nach einem der Patentansprüche 1 bis 6, **dadurch gekennzeichnet, dass** das Gewindeelement (14) mit der Innenseite der Bodenfläche (2) eines U-Profils (11) verbunden ist, das an den Endbereichen seiner Schenkelwände (12, 13) mit einem Wandbereich (3) des Kraftfahrzeugs verbunden ist.

8. Befestigungseinrichtung nach einem der Patentansprüche 1 bis 7, **dadurch gekennzeichnet, dass** die Bodenfläche des Stützteiles und/oder die Stützwand (2) vor dem Gewinde (15) eine Durchtrittsöffnung (18) aufweist und der Schaft der Gewindeschraube (19) durch die Durchtrittsöffnung (18) hindurch in das Gewinde (15) des Gewindeelements (14) einschraubbar ist.

9. Befestigungseinrichtung nach einem der Patentansprüche 1 bis 8, **dadurch gekennzeichnet, dass** das Gewindeelement (14), an seinem mit der Stützwand (2) verbundenen Stirnbereich entgegen gesetzt seitlich abstehende Laschen (35, 36) aufweist, die mit der Stützwand (2) verbunden oder zu verbinden sind.

10. Befestigungseinrichtung nach einem der Patentansprüche 1 bis 9, **dadurch gekennzeichnet, dass** das Gewindeelement (14) stirnseitig mit der Stützwand (2) und/oder mit dem Stützteil (20) verschweißt ist und/oder das Gewindeelement (14) gegebenenfalls im Bereich seiner Laschen (35, 36) mit der Stützwand (2) verschraubt oder verschweißt ist und/oder das Stützteil (20) im Bereich seiner Bodenfläche und/oder im Bereich seiner Schenkelflächen (25, 26) mit dem Gewindeelement (14) verschweißt ist und/oder das Stützteil (20) im Bereich seiner Befestigungslaschen mit der ortsfesten Wand verschraubt oder verschweißt sind.

11. Befestigungseinrichtung nach einem der Patentansprüche 1 bis 10, **dadurch gekennzeichnet, dass** das Bauteil ein Brückenrahmen (1) ist, an dem ein Getriebe befestigt ist und der Brückenrahmen (1) ein Oberteil (4) und ein Unterteil (5) aufweist, zwischen denen eine Distanzbuchse (6) angeordnet ist und das Oberteil (4) und das Unterteil (5) sowie die Distanzbuchse (6)jeweils eine Öffnung (7, 8, 9) aufweisen, die eine durchgehende Öffnung (10) bilden, die von dem Schaft der in das Gewinde (15) des Gewindeelements (14) eingeschraubten Gewindeschraube (19) durchdrungen ist, die mit einem Kopfteil (19') den Brückenrahmen (1) zu der Stützwand (2) und/oder zu dem Gewindeelement (14) belastet.

## Claims

1. A fastening device for fastening a component to a support wall (2) of a motor vehicle, comprising a threaded element (14), which is connected to the support wall (2) and has a thread (15), into which a threaded screw (19) can be screwed to fasten the component (1) to the support wall (2), and a support part (20) is connected, on the one hand, to the end region of the threaded element (14), which is remote from the support wall (2), and, on the other hand, is connected to a region of the support wall or a fixed wall (12, 13), of the support wall (2), **characterised in that** the support part (20) has a central region (23), which is U-shaped in cross-section and has a base face (24) and two leg faces (25, 26) projecting at a spacing from one another from the base face (24), the base face (24) being connected to the end region of the threaded element (14), which is remote from the support wall (2), and the support part (20), resting on at least one peripheral region of the threaded element (14), laterally supporting the threaded element (14).

2. A fastening device according to claim 1, **characterised in that** the support part (20) is a sheet metal part.

3. A fastening device according to claim 1 or claim 2, **characterised in that** the support part (20) is connected to a peripheral region of the threaded element (14).

4. A fastening device according to any one of claims 1 to 3, **characterised in that** the support part (20) is one-part or multi-part.

5. A fastening device according to claim 4, **characterised in that** at least one side region of the base face and/or at least one leg face (25, 26) has a lengthened face region (29, 30, 31, 32), which is angled with respect to the relevant base face or leg face (25, 26), and thus forms a fastening lug, which is connected or to be connected to a fixed wall (12, 13).

6. A fastening device according to claim 5, **characterised in that** at least at two opposing side regions of the support part (20), at least one leg face (25, 26) or the base face forms a fastening lug.

7. A fastening device according to any one of claims 1 to 6, **characterised in that** the threaded element (14) is connected to the inside of the base face (2) of a U-profile (11), which is connected at the end regions of its leg walls (12, 13) to a wall region (3) of the motor vehicle.

8. A fastening device according to any one of claims 1 to 7, **characterised in that** the base face of the support part and/or the support wall (2) has a through-opening (18) before the thread (15), and the shank of the threaded screw (19) can be screwed through the through-opening (18) into the thread (15) of the threaded element (14).

9. A fastening device according to any one of claims 1 to 8, **characterised in that** the threaded element (14) has, at its end region connected to the support wall (2), opposing laterally projecting lugs (35, 36), which are connected or to be connected to the support wall (2).

10. A fastening device according to any one of claims 1 to 9, **characterised in that** the threaded element (14) is welded at the end face to the support wall (2) and/or the support part (20) and/or the threaded element (14) is optionally screwed or welded in the region of its lugs (35, 36) to the support wall (2) and/or the support part (20) is welded in the region of its base face and/or in the region of its leg faces (25, 26) to the threaded element (14) and/or the support part (20) is screwed or welded in the region of its fastening lugs to the fixed wall.

11. A fastening device according to any one of claims 1 to 10, **characterised in that** the component is a bridge frame (1), on which a gearing is fastened and the bridge frame (1) has an upper part (4) and a lower part (5), between which a spacing bush (6) is arranged and the upper part (4) and the lower part (5) and the spacing bush (6) in each case have an opening (7, 8, 9), which form a through-opening (10), which is penetrated by the shank of the threaded screw (19) screwed into the thread (15) of the threaded element (14), which threaded screw, with a head part (19'), loads the bridge frame (1) with respect to the support wall (2) and/or with respect to the threaded element (14).

## Revendications

1. Installation de fixation d'un composant contre une paroi de support (2) d'un véhicule automobile comportant un élément fileté (14) relié à la paroi de support (2) et ayant un filetage (15) recevant par vissage une vis (19) pour la fixation de la pièce (1) à la paroi de support (2) ainsi qu'une pièce d'appui (20) reliée d'une part à la zone frontale de l'élément fileté (14), paroi à l'opposé de la paroi de support (2) et d'autre part avec une zone de la paroi de support (2) ou d'une paroi (12, 13) de la paroi de support (2),
**caractérisée en ce que**
la pièce d'appui (20) comporte une zone centrale (23) réalisée avec une section en forme de U et une surface de fond (24) ainsi que deux branches en forme de surfaces (25, 26), écartées l'une de l'autre, et venant en saillie de la surface de fond (24),
la surface de fond (24) étant reliée à la zone frontale de l'élément fileté (14) du côté opposé de celui de la paroi de support (2), et la pièce d'appui (20) s'appuie latéralement contre au moins une zone périphérique de l'élément fileté (14) appliquée contre l'élément fileté (14).

2. Installation de fixation selon la revendication 1,
**caractérisée en ce que**
la pièce d'appui (20) est une pièce en tôle.

3. Installation de fixation selon la revendication 1 ou 2,
**caractérisée en ce que**
la pièce d'appui (20) est reliée à une zone périphérique de l'élément fileté (14).

4. Installation de fixation selon les revendications 1 à 3,
**caractérisée en ce que**
la pièce d'appui (20) est en une ou plusieurs parties.

5. Installation de fixation selon la revendication 4,
**caractérisée en ce qu'**
au moins une zone latérale de la surface de fond et/ou au moins une branche en forme de surface (25, 26) comporte une zone de surface (29, 30, 31, 32), prolongée, recourbée par rapport à la surface de fond ou à la branche en forme de surface (25, 26) concernée, et constituant ainsi une patte de fixation reliée ou destinée à être reliée à une paroi fixe (12, 13).

6. Installation de fixation selon la revendication 5,
**caractérisée en ce que**
sur au moins deux zones latérales, opposées de la pièce d'appui (20), au moins une branche en forme de surface (25, 26) ou la surface de fond constituent une patte de fixation.

7. Installation de fixation selon les revendications 1 à 6,
**caractérisée en ce que**
l'élément fileté (14) est relié au côté intérieur de la surface de fond (2) d'un profil (11) à section en U, relié au niveau des zones d'extrémité de ses branches en forme de parois (12, 13) à une zone de paroi (3) du véhicule automobile.

8. Installation de fixation selon les revendications 1 à 7,
**caractérisée en ce que**
la surface de fond de la pièce d'appui et/ ou la paroi d'appui (2) comportent un orifice de passage (18) devant le filetage (15), et la tige de la vis (19) se visse à travers l'orifice de passage (18) dans le filetage (15) de l'élément fileté (14).

9. Installation de fixation selon les revendications 1 à 8,
**caractérisée en ce qu'**
au niveau de sa zone frontale reliée à la paroi de support (2), l'élément fileté (14) comporte des pattes (35, 36) venant latéralement en saillie de façon opposée, ces pattes étant reliées ou destinées à être reliées à la paroi de support (2).

10. Installation de fixation selon les revendications 1 à 9,
**caractérisée en ce que**
l'élément fileté (14) est soudé du côté frontal à la paroi de support (2) et/ou à la pièce d'appui (20) et/ou l'élément fileté (14) est vissé ou soudé le cas échéant au niveau de ses pattes (35, 36) à la paroi de support (2) et/ou la pièce d'appui (20) est soudée au niveau de sa surface de fond et/ou au niveau de ses surfaces en forme de branches (25, 26) à l'élément fileté (14) et/ou la pièce d'appui (20) est vissée ou soudée à la paroi fixe au niveau de ses pattes de fixation.

11. Installation de fixation selon les revendications 1 à 10,
**caractérisée en ce qu'**
la pièce est un châssis de pont (1) auquel se fixe une transmission et le châssis de pont (1) comporte une partie supérieure (4) et une partie inférieure (5) entre lesquelles se trouve un manchon d'écartement (6),
la partie supérieure (4) et la partie inférieure (5) ainsi que le manchon d'écartement (6) ayant respectivement une ouverture (7, 8, 9) formant un passage continu (10) traversé par la tige de la vis (19) vissée dans le filetage (15) de l'élément fileté (14), cette vis poussant par sa partie de tête (19'), le châssis de pont (1) vers la paroi d'appui (2) et/ou l'élément fileté (14).
